# EUROPÄISCHE PATENTSCHRIFT

(11) **EP 1 537 511 B1**
(45) Veröffentlichungstag und Bekanntmachung des Hinweises auf die Patenterteilung: **28.12.2005**
(21) Anmeldenummer: 04710006.0
(22) Anmeldetag: 11.02.2004
(51) Int. Cl.: G06F 17/60, H04L 29/06

(54) **VERFAHREN ZUR ERBRINGUNG VON DIENSTLEISTUNGEN ÜBER EIN KOMMUNIKATIONSNETZ**
METHOD FOR PROVIDING SERVICES VIA A COMMUNICATION NETWORK
PROCEDE POUR FOURNIR DES SERVICES PAR L'INTERMEDIAIRE D'UN RESEAU DE COMMUNICATIONS

(30) Priorität: 11.02.2003 DE 10305771
(43) Veröffentlichungstag der Anmeldung: 08.06.2005
(73) Patentinhaber: IPC Gmbh, 63579 Freigericht (DE)
(72) Erfinder: VON SAVIGNY, Hubertus, 63579 Freigericht (DE)
(74) Vertreter: Weidener, Jörg Michael
(86) Internationale Anmeldenummer: PCT/EP2004/001269
(87) Internationale Veröffentlichungsnummer: WO 2004/072876

(56) Entgegenhaltungen:
- WO-A-01/41014
- WO-A-02/05115
- US-A1- 2001 032 244

## Beschreibung

Die Erfindung betrifft ein Verfahren zur Erbringung von Dienstleistungen über ein Kommunikationsnetz nach dem Oberbegriff des Anspruchs 1. Darüber hinaus betrifft die vorliegende Erfindung ein System zur Erbringung von Dienstleistungen über ein Kommunikationsnetz, vorzugsweise von Telekommunikations- und/oder Internetdienstleistungen.

Ein Verfahren und ein System zur Erbringung von Dienstleistungen über das Internet ist bereits aus der Praxis bekannt, wie z.B aus WO1/41014 oder WO2/05115. Bei dem bekannten System werden von sog. Experten Fragen zu einer Vielzahl von Wissensgebieten beantwortet. Nach Herstellung einer Kommunikationsverbindung zwischen einem client und einem host wird von dem Nutzer eine Frage über den client an den host gestellt. Die von dem Nutzer über den client gestellte Frage wird auf einer Seite des hosts angezeigt und ist für weitere clients, die mit dem host ebenfalls eine Kommunikationsverbindung herstellen, lesbar und ggf. beantwortbar. Um die gestellten Fragen in möglichst kurzer Zeit mit qualifizierten Antworten beantworten zu können, ist bei dem bekannten Verfahren vorgesehen, daß die weiteren Nutzer die über den clients gestellte und über den host vermittelte bzw. weitergeleitete Frage über die weiteren client im wesentlichen zeitgleich lesen und sich jeweils online als sogenannter angemeldeter Beantworter der gestellten Frage beim host registrieren lassen können, wobei zur Beantwortung der gestellten Frage nur einer vorgegebenen und begrenzten Anzahl von weiteren Nutzern der Status eines "angemeldeten Beantworters" eingeräumt wird. Im Ergebnis wird der Kreis der potentiellen Beantworter auf alle Nutzer des Systems erweitert, wobei diese die Möglichkeit haben, die gestellten Fragen online zu lesen und Online und damit unmittelbar zu beantworten. Allerdings ist nicht jeder beliebige Nutzer zur Beantwortung der gestellten Frage vorgesehen bzw. berechtigt. Bei dem bekannten Verfahren erfolgt eine automatische Begrenzung der Anzahl der angemeldeten Beantworter durch eine entsprechende Statuseinräumung, die über den host vorgenommen wird. Durch die vorgenannte Maßnahme wird bei den weiteren Nutzern, die den Status des angemeldeten Beantworters erlangen wollen, eine Konkurrenzsituation geschaffen, die in der Regel dazu führt, daß sich weitere Nutzer häufig unverzüglich nach Stellung einer Frage als Beantworter anmelden, um den Status des angemeldeten Beantworters eingeräumt zu bekommen. Verbunden mit dem Status des angemeldeten Beantworters ist nämlich, daß dieser nach der Beantwortung der Frage eine Vergütung o. dgl. erhält. Die Höhe der Vergütung richtet sich nach der durch den Nutzer durchgeführten Bewertung des Rechercheergebnisses bzw. der Antwort des betreffenden Beantworters. Dadurch kann der Benutzer einen selbstregulierenden Einfluß auf die Qualität und Effizienz der Beantwortung einer Frage ausüben. Im Ergebnis werden die jeweils gestellten Fragen unverzüglich und in der Regel mit hoher Qualität beantwortet.

Aufgabe der vorliegenden Erfindung ist es nun, ein Verfahren und ein System der eingangs genannten Art zur Verfügung zu stellen, wobei angefragte Dienstleistungen in möglichst kurzer Zeit und mit hoher Qualität erbracht werden.

Die vorgenannte Aufgabe ist bei einem Verfahren der eingangs genannten Art durch die Merkmale des Anspruchs 1 gelöst.

Die angefragte Dienstleistung wird von dem Nutzer an den host übertragen, wobei die angefragte Dienstleistung auf einer von dem host bereitgestellten Seite angezeigt wird bzw. über die Anbieter-clients abfragbar ist und/oder an die Anbieter-clients übertragen wird. Erfindungsgemäß ist nun vorgesehen, daß ein Anbieter mit einem hohen Rang in der Rangfolge bzw. mit hohen dienstleistungsspezifischen Qualitätsparameter-Werten die angefragte Dienstleistung vor einem rangniederen Anbieter anbieten bzw. erbringen kann oder auch in anderer Weise gegenüber dem rangniedrigeren Anbieter privilegiert ist. Dies kann beispielsweise dadurch geschehen, daß alle Anbieter gleichzeitig von der angefragten Dienstleistung Kenntnis nehmen und entsprechende Angebote auf eine von dem host bereitgestellte Seite übertragen können. Der host kann dann automatisch die Weiterleitung der Angebote an den Nutzer entsprechend der Rangfolge der Anbieter steuern oder die Angebote dem Nutzer entsprechend der Rangfolge (zeitversetzt) anzeigen. Es ist grundsätzlich auch möglich, daß die angefragte Dienstleistung von dem host entsprechend der Rangfolge der Anbieter automatisch zeitversetzt an die jeweiligen Anbieter-clients übertragen wird, die Anbieter also nacheinander entsprechend ihrer Ranghöhe von der angefragten Dienstleistung Kenntnis nehmen können. In diesem Fall können die Anbieter die Angebote an den host oder auch direkt an den client übertragen. Dies wirkt sich sehr positiv auf die Qualität der erbrachten Dienstleistung aus.

Letztlich übernimmt der host bei der Erfindung eine automatische Vermittlungsfunktion zwischen dem Nutzer und den Anbietern und eine Auswahlfunktion unter den einzelnen Anbietern. Hinzuweisen ist im übrigen darauf, daß es sich bei dem host um eine Vorrichtung in Art eines Zentralcomputers handelt. Dieser kann durch einen einzelnen Computer oder eine Vielzahl von miteinander vernetzten Computern gebildet sein. Bei dem client handelt es sich ebenfalls um eine Einrichtung, die Computer-Hardware aufweist, wie PCs, Laptops, PDAs, Mobiltelefone usw. Hinzuweisen ist im übrigen darauf, daß mit dem Ausdruck "client" bzw. "Anbieter-client" nicht nur die jeweilige Rechnereinheit als solche sondern auch die dazugehörige Software und Hardware gemeint ist, wozu insbesondere Tastaturen sowie Displays, Bildschirme o. dgl. gehören, auf denen die relevanten Informationen angezeigt werden.

Ist gemäß des Prinzips "first come - first serve" eine Vergütung nur für diejenigen Anbieter vorgesehen, die eine Dienstleistung zuerst anbieten bzw. erbringen, wird jeder Anbieter bemüht sein, einen möglichst hohen Rang in der Rangfolge aller Anbieter einzunehmen, um vor einem konkurrierenden Anbieter zum Anbieten bzw. zur Erbringung der Dienstleistung zugelassen zu werden. Ein hoher Rang in der Rangfolge ist jedoch nur für solche Anbieter vorgesehen, die nach Erbringung der Dienstleistung eine vergleichsweise gute Bewertung (Ranghöhe) durch den host bzw. den Nutzer erhalten haben. Dies motiviert die Anbieter, eine angefragte Dienstleistung so anzubieten bzw. zu erbringen, daß seine Bewertung hinsichtlich vorgegebener dienstleistungsspezifischer Qualitätsparameter vergleichsweise gut ausfällt. Das gleiche gilt dann, wenn eine Vergütung gestaffelt entsprechend der Rangfolge bzw. entsprechend der Höhe der dienstleistungsspezifischen Qualitätsparameter-Werte eines Anbieters vorgesehen wird.

Darüber hinaus ist darauf hinzuweisen, daß es sich bei den zur "Erbringung" über ein Kommunikationsnetz vorgesehenen Dienstleistungen nicht nur um die Auskunftserteilung handeln kann, wenngleich der eingangs genannte Stand der Technik ein Verfahren zur Auskunftserteilung über ein Kommunikationsnetz betrifft. Weitere mögliche Anwendungsbereiche der Erfindung betreffen beispielsweise auch Tätigkeiten im Bereich der Textverarbeitung oder der Textübersetzung. Grundsätzlich kann es sich bei den zur Erbringung über ein Kommunikationsnetz vorgesehenen Dienstleistungen um jegliche Form von Dienstleistungen handeln, die von einer Mehrzahl von Anbietern angeboten und im wesentlichen für den Nutzer anonymisiert über das Kommunikationsnetz angefragt werden können. Bevorzugt ist aber der Einsatzbereich, bei dem der Nutzer eine bestimmte Frage hat und die Anbieter dem Nutzer eine geeignete Internetseite nennen, durch die die Frage des Nutzers beantwortet werden kann.

Grundsätzlich ist es möglich, daß alle mit dem host kommunizierenden Anbieter in ihrer Ranghöhe und damit in der Rangfolge erfaßt werden. Ebenso gut ist es jedoch auch möglich, daß eine Vorklassifizierung der Anbieter in der Art einer Zulassungshürde erfolgt, um die Anzahl der zugelassenen bzw. angemeldeten Anbieter vorzugsweise automatisch zu begrenzen. Dazu kann beispielsweise durch den host eine Statuseinräumung vorgesehen werden, wie sie bereits aus dem eingangs genannten Stand der Technik bekannt ist, worauf ausdrücklich Bezug genommen wird. Bevorzugt ist es, die Anzahl der Anbieter pro Anfrage automatisch durch den host zu begrenzen, und zwar auf 2 bis 10 Anbieter, vorzugsweise auf 3 bis 5 Anbieter. In diesem Zusammenhang ist es von besonderem Vorteil, wenn nur solche Anbieter die Dienstleistung erbringen können, die zuvor den Status eines "angemeldeten Anbieters" erhalten haben. Ein "angemeldeter Anbieter" ist ein solcher, der vom host zu einer konkreten Anfrage die Freigabe zur Abgabe eines Angebotes erhalten hat, wobei selbstverständlich vorab für jeden Anbieter eine Registrierung beim host notwendig ist, die nur durch Zustimmung des hosts bzw. des Betreibers des hosts zu erlangen ist. Durch den eingeräumten Status hat der "angemeldete Anbieter" beispielsweise das Recht, auf die Angeboteingabeseite des hosts zuzugreifen, was nicht-angemeldeten Anbietern nicht möglich ist. Von besonderem Vorteil ist es in diesem Zusammenhang auch, daß den am erfindungsgemäßen Verfahren teilnehmenden angemeldeten Anbietern auf ihren Anbieter-clients die Anzahl der angemeldeten Anbieter bzw. der zur Erbringung einer bestimmten Dienstleistung berechtigten Anbieter angezeigt wird, und zwar vorzugsweise in realtime. Hierdurch wird eine transparente Konkurrenzsituation der einzelnen Anbieter erzeugt. Darüber hinaus bietet es sich an, einem angemeldeten Anbieter eine Reservierungszeit einzuräumen, innerhalb der er die Möglichkeit hat, die betreffende Dienstleistung zu erbringen. Innerhalb dieser Reservierungszeit ist es nicht möglich, daß ein anderer Anbieter ihm zuvor kommt.
Die zur Erbringung der Dienstleistung vorgesehenen bzw. die zugelassenen Anbieter können durch den host automatisch und/oder durch den Nutzer und/oder durch Dritte bewertet werden. Die Ermittlung des Rangwerts und der Rangfolge erfolgt dann automatisch durch den host, so daß dem Nutzer stets eine favorisierte Auswahl aller zur Erbringung der Dienstleistung vorgesehenen bzw. zugelassenen Anbieter angezeigt werden kann. Dies wirkt sich positiv auf die Bereitschaft des Kunden bzw. Nutzer aus, das erfindungsgemäße Verfahren zu benutzen und ein auf seine Anfrage hin eingegangenes Angebot auch anzunehmen. In diesem Zusammenhang ist es auch möglich, daß der Nutzer eine Entscheidungsmöglichkeit darüber hat, welcher der angezeigten hochrangigen Anbieter schließlich die Dienstleistung erbringen soll. Die Entscheidung des Nutzers kann beispielsweise auf der Grundlage der Bewertung bzw. der dienstleistungsspezifischen Qualitätsparameter-Werte eines Anbieters oder einer konkreten Bewerbung jedes zugelassenen Anbieters erfolgen. Vorzugsweise ist es jedoch so, daß der host automatisch einen oder mehrere ranghohe Anbieter auswählt, die die angefragte Dienstleistung erbringen dürfen. Der Nutzer selbst hat in diesem Fall vorzugsweise keine Auswahlmöglichkeit, was das Verfahren für den Nutzer wesentlich vereinfacht.

Das erfindungsgemäße Verfahren zeichnet sich zudem dadurch aus, daß Anbieter mit vergleichsweise schlechten dienstleistungsspezifischen Qualitätsparameter-Werten, was einer schlechteren Zuverlässigkeit und/oder einer schlechteren Qualifikation des betreffenden Anbieters für die Erbringung einer Dienstleistung gleichkommt, eine vergleichsweise geringere Chance haben, eine angefragte Dienstleistung erbringen zu dürfen. Anbieter mit einer geringen Ranghöhe werden daher benachteiligt und/oder können ggf. ganz aus der Rangfolge bzw. der Bewertung der Ranghöhe ausgeschlossen werden. Dies führt dazu, daß ein Anreiz für alle Anbieter der Dienstleistung geschaffen wird, möglichst gute bzw. hohe dienstleistungsspezifische Qualitätsparameter-Werte zu erreichen, was beispielsweise durch die Erbringung von Dienstleistungen hoher Qualität möglich ist. Darüber hinaus wird das Qualitätsbewußtsein und die Kundenorientierung bei allen Dienstleistungsanbietern gefördert.

Die Erfindung sieht vor, daß die Anbieter entsprechend ihrer jeweiligen Ranghöhe in der Rangfolge privilegiert werden, was beispielsweise dadurch erfolgt, daß die Anbieter entsprechend der jeweiligen Ranghöhe in der Rangfolge nacheinander zur Erbringung bzw. zum Anbieten der Dienstleistung vorgesehen werden. Der Begriff "nacheinander" kann zum einen beinhalten, daß zunächst nur der bzw. die ranghöchste(n) Anbieter die Dienstleistung erbringt kann bzw. erbringen können. Erst danach kann beispielsweise der in der Rangfolge dem ranghöchsten Anbieter nachfolgende Anbieter mit einem vergleichsweise niederen Rang die Dienstleistung erbringen bzw. dem Nutzer anbieten. Grundsätzlich ist es jedoch auch möglich, daß eine bestimmte Anzahl von Anbietern zur gleichzeitigen Erbringung der Dienstleistung vorgesehen ist und daß die Rangfolge dazu dient, unter den jeweils verfügbaren Anbietern die Anbieter mit den höchsten Rängen auszuwählen. Grundsätzlich sind auch andere Formen der Privilegierung möglich. Letztlich geht es - wie in einem Wolfsrudel - um eine Bevorzugung der Ranghöheren gegenüber den Rangniedrigeren.

Eine bevorzugte Ausführungsform des erfindungsgemäßen Verfahrens sieht vor, daß die Anbieter entsprechend ihrer jeweiligen Ranghöhe wenigstens zwei unterschiedlichen Qualifikationsklassen bzw. Gruppen mit unterschiedlicher Ranghöhe zugeteilt werden, wobei Anbieter aus einer ranghohen Qualifikationsklasse vor den Anbietern aus einer rangniederen Qualifikationsklasse zur Erbringung bzw. zum Anbieten der Dienstleistung vorgesehen werden. Dabei ist es erfindungsgemäß so, daß die unterschiedlichen Qualifikationsklassen jeweils Anbieter aus einem bestimmten Bereich der Rangfolge enthalten. Die Qualifikationsklassen dienen dazu, die Gesamtzahl der in einer Rangfolge erfaßten Anbieter in diskrete Teilbereiche mit unterschiedlich gut qualifizierten Anbietern aufzuteilen. Die Qualifikationsklassen als solche können ebenfalls in der Art einer Rangfolge angeordnet werden, wobei sich die Ranghöhe der Qualifikationsklasse aus der Besetzung der Qualifikationsklasse bzw. aus der Ranghöhe der Anbieter in der Qualifikationsklasse ergibt. Im einfachsten Fall werden durch den host zunächst alle Anbieter einer Qualifikationsklasse zugeteilt. Nach der Bewertung der Dienstleistungen der Anbieter und Ermittlung zunächst der individuellen Ranghöhe und dann der Rangfolge aller Anbieter kann eine Separation der Anbieter entsprechend der Ranghöhe bzw. der Rangfolge durchgeführt werden, wobei ranghohe Anbieter einer ersten Qualifikationsklasse und rangniedere Anbieter einer zweiten Qualifikationsklasse zugeteilt werden können.

Um die Qualität bei der Erbringung von Dienstleistungen weiter zu steigern und den Anbietern Anreize und eine stärkere Motivation zur Leistungssteigerung zu geben, ist es erfindungsgemäß auch vorgesehen, daß Anbieter mit einem hohen Rang, vorzugsweise mit dem höchsten Rang, sofort zur Erbringung der Dienstleistung vorgesehen werden und daß Anbieter mit einem vergleichsweise niederen Rang erst nach Ablauf einer Zeitsperre bzw. um die Dauer der Zeitsperre zeitversetzt zur Erbringung der Dienstleistung vorgesehen werden, was automatisch durch den host erfolgt. Dabei geht es im wesentlichen darum, daß die qualifiziertesten Anbieter einen Zeitvorteil vor den weniger qualifizierten Anbietern erlangen. Wiederum wird die Qualifikation der Anbieter anhand von dienstleistungsspezifischen Qualitätsparametern beurteilt. Zwischen zwei Anbietern mit unterschiedlich hohem Rang wird automatisch durch den host eine Zeitsperre dahingehend verhängt, daß von dem rangniederen Anbieter auf die Anfrage des Nutzers erst später die Dienstleistung angeboten werden kann oder daß die Anfrage überhaupt erst später an einen rangniederen Anbieter weitergeleitet wird. Dies bewirkt, daß die betreffenden Anbieter nicht zeitgleich, sondern zeitversetzt zum Anbieten bzw. zur Erbringung der Dienstleistung vorgesehen werden. Erfolgt eine Vergütung nur für die Anbieter, die zuerst eine Dienstleistung erbringen, stellt die Zeitsperre einen hohen Anreiz für alle Anbieter dar, einen möglichst hohen Rang in der Rangfolge einzunehmen.

Ebenso gut ist es natürlich auch möglich, daß Anbieter aus einer ranghohen, vorzugsweise aus der ranghöchsten Qualifikationsklasse sofort zur Erbringung der Dienstleistung vorgesehen werden und daß Anbieter aus einer vergleichsweise rangniederen Qualifikationsklasse erst nach Ablauf der Zeitsperre die Dienstleistung erbringen können bzw. die Dienstleistung anbieten können. Hierbei geht es im wesentlich darum, zwischen zwei unterschiedlichen ranghohen Qualifikationsklassen eine Zeitsperre zu verhängen. Dadurch könnten beispielsweise alle der ersten Qualifikationsklasse zugeteilten Anbieter sofort (und untereinander chancengleich) die Dienstleistung anbieten bzw. erbringen, während die Anbieter aus einer rangniederen Qualifikationsklasse erst bis zum Ablauf der Zeitsperre warten müssen, um die Dienstleitung anbieten bzw. erbringen zu können.

Zur Bewertung der Anbieter bzw. zur Ermittlung der Rangfolge ist vorzugsweise vorgesehen, daß dienstleistungsspezifische Qualitätsparameter-Werte mehrerer Anbieter durch den host miteinander verglichen und/oder dienstleistungsspezifische Qualitätsparameter-Werte der Anbieter mit festgelegten Sollwerten verglichen werden. Dadurch ist es zum einen möglich, eine vergleichende Bewertung zwischen mehreren Anbietern, die sich um die Erbringung einer angefragten Dienstleistung bemühen, vornehmen zu können. Ebenso gut ist es natürlich auch möglich, daß die Anbieter anhand standardisierter Bewertungskriterien bewertet werden. Somit ist sowohl eine relative Bewertung der Anbieter als auch eine absolute Bewertung der Anbieter grundsätzlich durch den host durchführbar.

Um die Motivation der Anbieter und die Qualität der von dem betreffenden Anbieter erbrachten Dienstleistung kontinuierlich zu steigern, ist es vorzugsweise vorgesehen, daß die Bewertung der Anbieter bzw. die Ermittlung der Rangfolge auf der Grundlage einer Mehrzahl von Dienstleistungsanfragen und/oder einer Mehrzahl von erbrachten Dienstleistungen erfolgt. Grundsätzlich ist es natürlich auch möglich, daß bereits nach einer erbrachten Dienstleistung eine Bewertung der Anbieter durchgeführt wird. Es versteht sich, daß mit steigender Anzahl von Bewertungsdurchläufen die Qualifikation der Anbieter zunehmend besser beurteilt werden kann. Insbesondere werden vereinzelt erbrachte Dienstleistungen mit sehr hoher Qualität bzw. sehr schlechter Qualität nicht überbewertet, sondern relativiert.

Vorzugsweise erfolgt die Bewertung der Dienstleistung eines Anbieters auf der Grundlage zeitlicher und/oder qualitativer und/oder quantitativer Mittelung der dienstleistungsspezifischen Qualitätsparameter-Werte des betreffenden Anbieters. Dadurch kann der Anbieter über einen längeren Zeitraum und/oder relativ zu anderen Anbietern und/oder absolut im Vergleich zu vorgegebenen Sollwerten bewerten werden. Das trägt zu der hohen Aussagekraft der bei dem erfindungsgemäßen Verfahren vorgesehenen Anbieterbewertung bei.

Die Bewertung der Anbieter zur Ermittlung der Rangfolge bzw. die vom host vorgenommene Privilegierung, insbesondere durch Verhängung einer Zeitsperre, kann beispielsweise durchgeführt werden auf der Grundlage
- der Anzahl der erbrachten Dienstleistungen,
- der Verfügbarkeit des Dienstleistungsanbieters, vorzugsweise über die innerhalb eines Bezugzeitraumes ermittelte online-Zeit des Anbieters,
- der Anzahl der von dem betreffenden Anbieter erstellten Dienstleistungsangebote,
- der Anzahl der bearbeiteten Dienstleistungsanfragen,
- der Anzahl der gelesenen Dienstleistungsanfragen,
- des Prozentsatzes der übernommenen Dienstleistungsanfragen von den gelesenen Dienstleistungsanfragen,
- des Prozentsatzes der erbrachten Dienstleistungen,
- des Umfangs der erbrachten Dienstleistungen,
- des Prozentsatzes der im Vergleich zu anderen Anbietern erbrachten Dienstleistungen,
- der durchschnittlichen Zeitdauer bis zur Annahme der Dienstleistung,
- der durchschnittlichen Bearbeitungszeit zur Erbringung der Dienstleistung nach deren Annahme,
- der durchschnittlichen Zeitdauer bis zum Eingang des Dienstleistungsergebnisses beim Nutzer bzw. beim host,
- des Prozentsatzes der vom Nutzer oder vom host als "unbrauchbar" oder "fehlerhaft" o. dg1. bewerteten erbrachten Dienstleistungen,
- der Durchschnittsnote eines oder mehrerer dienstleistungsspezifischer Parameterwerte innerhalb eines Bezugszeitraums und/oder einer bestimmten Art von Dienstleistungen,
- der Durchschnittsnote ermittelt aus wenigstens einem dienstleistungsspezifischem Qualitätsparameter, ermittelt in periodischen Abständen oder durch zufällige Auswahl einzelner Qualitätsparameter-Werte des Anbieters und/oder
- eines komplexen Kennwertes aus wenigstens zwei der vorgenannten dienstleistungsspezifischen Qualitätsparameter.

Wenngleich die Anbieter entsprechend der jeweiligen Ranghöhe in der Rangfolge nacheinander zur Erbringung bzw. zum Anbieten der Dienstleistung vorgesehen werden, bietet es sich zur weiteren Erhöhung der Qualität der erbrachten Dienstleistungen an, Anbieter mit einem sehr niedrigen Rang bzw. aus einer sehr niedrigen Qualifikationsklasse überhaupt nicht zum Anbieten bzw. zur Erbringung der Dienstleistung vorzusehen. Beispielsweise kann die Zeitsperre solcher Anbieter gegenüber den ranghöheren Anbietern derart ausgedehnt werden, daß das Anbieten der Dienstleistungen bzw. deren Erbringung für den betreffenden Anbieter in aller Regel nicht mehr möglich ist, beispielsweise, weil die angefragte Dienstleistung bereits erbracht worden ist.

Die Dauer der Zeitsperre kann in Abhängigkeit von der Ranghöhe der Qualifikationsklasse und/oder von der Ranghöhe des Anbieters festgelegt werden. Grundsätzlich ist es auch möglich, daß die Dauer der Zeitsperre individuell für einen Anbieter festgelegt wird. Dies bietet den Vorteil, daß besonders qualifizierte Anbieter stärker vom host bevorzugt und nicht-qualifizierte Anbieter der Dienstleistung individuell mit einer Zeitstrafe versehen werden können. Dies ist beispielsweise dann von Vorteil, wenn über die Bewertung der Anbieter nach dienstleistungsspezifischen Qualitätsparametern hinaus weitere Umstände hinzutreten, die es rechtfertigen, einen rangniederen Anbieter noch stärker gegenüber den anderen Anbietern zu benachteiligen. Die individuell festgelegte Zeitsperre kann auch zum Ausschluß einzelner Anbieter aus der Gesamtzahl der Anbieter führen.

Die Dauer der Zeitsperre kann zudem auch in Abhängigkeit von der Rangverteilung und/oder von der Gesamtzahl der Anbieter (die gerade online sind) und/oder von der Anzahl der Anbieter in einer Qualifikationsklasse festgelegt werden. Dies führt dazu, daß die Zeitverzögerung relativ nach der im konkreten Fall überhaupt zur Erbringung der Dienstleistung zugelassenen bzw. angemeldeten Anbieter festgelegt wird. Fällt beispielsweise ein ranghoher Anbieter aus irgendeinem Grunde aus oder werden gleichzeitig mehrere Dienstleistungen angefragt, kann die Zeitsperre eines rangniederen Anbieters verkürzt oder sogar gänzlich aufgehoben werden. Wesentlich dabei ist, daß es durch die Zeitsperre nicht zu einer unnötigen Verzögerung bei der Erbringung der Dienstleistung bzw. beim Anbieten der Dienstleistung kommt.

Um die Bewertung der einzelnen Anbieter stets zu aktualisieren und flexibel auf Qualitätsänderungen der erbrachten Dienstleistungen bzw. auf Änderungen der Qualifikation einzelner Anbieter reagieren zu können, ist es erfindungsgemäß von Vorteil, daß die Anbieter nach jeder erbrachten Dienstleistung erneut bewertet werden. Es versteht sich, daß die Bewertung der Anbieter auch nach mehreren angebotenen bzw. erbrachten Dienstleistungen und/oder periodisch erfolgen kann.

Um die Konkurrenzsituation zwischen den Anbietern zu erhöhen und dadurch die Auslese von nicht-qualifizierten Anbietern zu steigern, ist es erfindungsgemäß bevorzugt, daß die angefragte Dienstleistung allen Anbietern gleichzeitig angezeigt wird, und zwar in realtime. Wenn alle Anbieter gleichzeitig über die angefragte Dienstleistung in Kenntnis gesetzt werden, ist es erfindungsgemäß vorgesehen, daß Anbieter mit einem niederen Rang bzw. aus einer niederen Qualifikationsklasse erst nach Ablauf der Zeitsperre, zumindest aber nach den ranghöheren Anbietern die Dienstleistung anbieten bzw. erbringen können. Nach Ablauf der Zeitsperre kann der betreffende Anbieter dann die angefragte Dienstleistung anbieten bzw. ggf. erbringen, ohne daß es zu weiteren Verzögerungen kommt.

Um das Wetteifern der Anbieter um einen hohen Rang in der Rangfolge zu verstärken und dadurch die Qualifikation der erbrachten Dienstleistungen auf hohem Niveau sicherzustellen, ist es vorgesehen, einem Anbieter die ihn und/oder andere Anbieter betreffende Qualifikationsklasse und/oder die Rangfolge und/oder die dienstleistungsspezifischen Qualitätsparameter-Werte anzuzeigen. Ebenso gut können einem Anbieter die Dauer der Zeitsperre und/oder die verbleibende Dauer bis zum Ablauf der Zeitsperre und/oder die Bewertung angezeigt werden. Die Motivation des Anbieters zur Steigerung der eigenen Leistung wird dadurch erhöht, daß es dem Anbieter möglich ist, seine Leistung mit den Leistungen konkurrierender Anbieter direkt zu vergleichen und entsprechende Maßnahmen zu treffen, um in der Rangfolge aufzusteigen. Es versteht sich, daß auch dem Nutzer ein Einblick darüber verschafft werden kann, welche Qualifikation ein Anbieter hat. Der Nutzer kann beispielsweise selbst darüber entscheiden, welche der dienstleistungsspezifischen Qualitätsparameter gerade für die von ihm angefragte Dienstleistung von besonderem Interesse sind. In diesem Zusammenhang läßt es die Erfindung grundsätzlich zu, eine durch den Nutzer durchgeführte individuelle Gewichtung der Bewertung der Anbieter durchzuführen.

Um einen für eine gewisse Zeitdauer gesperrten Anbieter auf den bevorstehenden Ablauf der Zeitsperre hinzuweisen, kann dem betreffenden Anbieter ein den Ablauf der Zeitsperre kennzeichnendes Signal angezeigt werden. Beispielsweise ist es möglich, daß die Kommunikationsverbindung zwischen dem host, dem client und den Anbieter-clients derart ausgebildet ist, daß eine Dienstleistungsanfrage des Nutzers mit einer Markierung versehen direkt auf dem Anbieter-client eines gesperrten Anbieters oder auf dem host angezeigt wird. Die Markierung weist den betreffenden Anbieter darauf hin, daß er für die Erbringung der angefragten Dienstleistungen gesperrt ist. Um den gesperrten Anbieter auf das Ende der Sperre hinzuweisen, kann beispielsweise die Markierung in ein Blinksignal übergehen. Auch ein Farbwechsel, beispielsweise von rot auf grün, ist möglich. Der gesperrte Anbieter weiß in diesem Fall, daß er nach einer kurzen Zeitdauer die angefragte Dienstleistung anbieten bzw. erbringen kann.

Nachfolgend wird die Erfindung ohne Beschränkung des allgemeinen Erfindungsgedankens anhand der Zeichnung beispielsweise für ein Verfahren zur Auskunftserteilung über ein Kommunikationsnetz beschrieben. Es zeigen:
- Fig. 1: ein System zur Erbringung von Dienstleistungen über ein Kommunikationsnetz zu einem Zeitpunkt tₙ,
- Fig. 2: das in Fig. 1 dargestellte System zum Zeitpunkt tₙ₊₁.

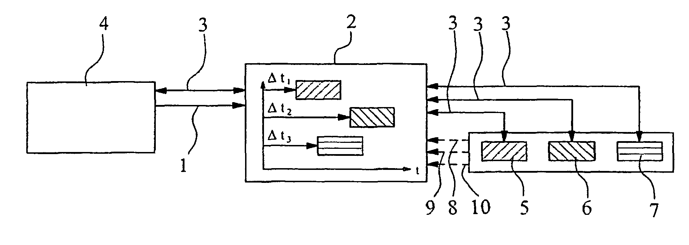

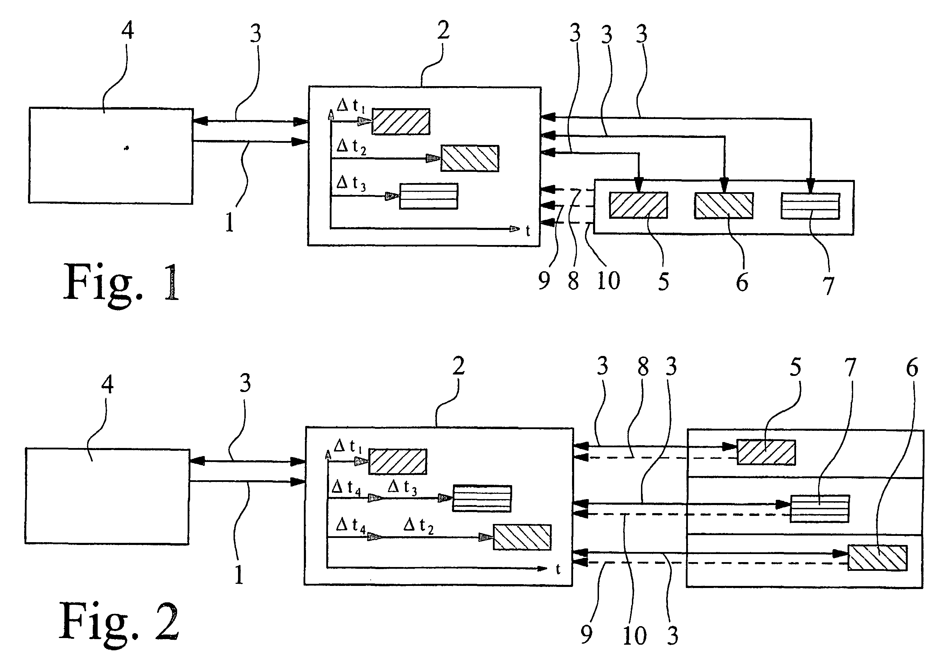

In den Fig. 1 und 2 ist ein System zur Auskunftserteilung über ein Kommunikationsnetz, insbesondere über das Internet dargestellt. Im vorliegenden Fall handelt es sich bei der zu erbringenden bzw. anzubietenden Dienstleistung um die Beantwortung einer Frage 1. Das System weist einen host 2 auf, der über eine Kommunikationsverbindung 3 mit einem client 4 eines Nutzers kommuniziert. Bei der Kommunikationsverbindung 3 kann es sich beispielsweise um das Internet handeln. Es versteht sich, daß es sich bei der Kommunikationsverbindung grundsätzlich auch um jegliche drahtgebundene oder drahtlose Verbindung, wie beispielsweise eine Funkverbindung, handeln kann. Darüber hinaus kommuniziert der host 2 mit Anbieter-clients 5, 6, 7 ebenfalls über eine Kommunikationsverbindungen 3. Beispielsweise kann es so sein, daß nach der Herstellung der Kommunikationsverbindung 3 zwischen dem dient 4 und dem host 2 zur Erlangung einer Auskunft vom Nutzer eine Frage 1 über den client 4 an den host 2 gestellt wird, wobei die über den client 4 gestellte Frage 1 auf einer Beantworterseite des hosts 2 angezeigt wird. Über die zwischen den Anbieter-clients 5, 6, 7 und dem host 2 vorgesehenen Kommunikationsverbindungen 3 ist die auf einer Seite des hosts 2 angezeigte Frage 1 für die den Anbieter-clients 5, 6, 7 zugeordneten Beantworter 1 lesbar und ggf. beantwortbar. Im Sinne der Erfindung handelt es sich bei den Beantwortern um die Anbieter der Dienstleistung "Beantwortung einer Frage 1". Damit ein Beantworter/Anbieter die Frage 1 beantworten kann, ist vorzugsweise eine vorhergehende Registrierung des Anbieters erfolgt, die es ermöglicht, auf die an sich nicht ohne weiteres zugängliche Beantworterseite des hosts 2 zuzugreifen.
In der Fig. 1 ist das System zum Zeitpunkt tₙ gezeigt, wobei der Nutzer über den client 4 eine Frage 1 zum ersten Mal an den host 2 gestellt hat. Zur Beantwortung der Frage 1 werden von Beantwortern über die Anbieter-clients 5, 6, 7 Antworten 8, 9, 10 an den host 2 übertragen und auf einer weiteren Seite des host 2 angezeigt. Das Übertragen der Antworten 8, 9, 10 ausgehend von den Anbieter-clients 5, 6, 7 an den host 2 stellt im vorliegenden Fall die Erbringung der Dienstleistung "Beantwortung einer Frage 1" dar. Üblicherweise erfolgt die Beantwortung der Frage 1 durch Nennung einer geeigneten Internetseite unter Angabe der betreffenden Internetadresse.

Erfindungsgemäß ist nun vorgesehen, daß die Kommunikationsverbindungen 3 zwischen dem host 2, dem client 4 und den Anbieter-clients 5, 6, 7 derart ausgebildet sind, daß die Beantworter bzw. Anbieter der Dienstleistung nach festgelegten dienstleistungsspezifischen Qualitätsparametern durch den host 2 und/oder durch den Nutzer und/oder durch Dritte bewertet werden können. Die Antworten 8, 9, 10 beinhalten in dem hier beschriebenem System jeweils Recherche-Ergebnisse auf die vom Nutzer über den client 4 gestellte Frage 1 und können eine Mehrzahl von recherchierten Ergebnissen aufweisen. Darüber hinaus können die Antworten 8, 9, 10 mit einem Kommentar des Beantworters versehen werden. Bei den zur Bewertung der Beantworter bzw. Anbieters vorgesehenen dienstleistungsspezifischen Qualitätsparametern kann es sich beispielsweise handeln um
- die Anzahl der Recherche-Ergebnisse bzw. die Anzahl der Antworten 8 bzw. 9 bzw. 10, die ein Beantworter an den host 2 überträgt,
- die auf einen Bezugszeitraum gemessene online-Zeit, über die ein Beantworter die Kommunikationsverbindung 3 zwischen dem host 2 und dem betreffenden Anbieter-client 5, 6, 7 aufrecht erhält,
- die Anzahl der von einem Beantworter gelesenen Fragen 1,
- den Prozentsatz der von dem Beantworter bearbeiteten Fragen 1 im Verhältnis zu den auf dem host 2 angezeigten Fragen 1,
- den Prozentsatz der mit einem Kommentar versehenen Antworten 8, 9, 10,
- den Umfang der abgegebenen Kommentare,
- den Prozentsatz der vor anderen Beantwortern bzw. ausschließlich durch einen Beantworter beantworteten Fragen 1,
- die durchschnittliche Zeitdauer bis zur Entscheidung eines Beantworters darüber, eine gestellte Frage 1 zu beantworten,
- die durchschnittliche Bearbeitungszeit zur Beantwortung der Frage 1,
- die durchschnittliche Zeitdauer bis zum Eingang des Recherchen-Ergebnisses bzw. der Antwort 8, 9, 10 auf dem host 2,
- den Prozentsatz der als "falsch" oder "unbrauchbar" bewerteten Recherche-Ergebnisse bzw. Antworten 8, 9, 10,
- die Durchschnittsnote beispielsweise ermittelt aus jedem dritten Recherche-Ergebnis eines Anbieters,
- ein Kennfeld aus wenigstens zwei der vorgenannten dienstleistungsspezifischen Qualitätsparameter und/oder
- die Durchschnittsnote aus einer Mehrzahl von bewerteten dienstleistungsspezifischen Qualitätsparametern und/oder die Durchschnittsnote innerhalb eines Bezugszeitraumes und/oder eines Themengebietes.

Gemäß Fig. 1 ist als dienstleitungsspezifischer Qualitätsparameter die Bearbeitungszeit Δt₁, Δt₂, Δt₃ vorgesehen, die nach dem Stellen der Frage 1 durch den Nutzer zur Beantwortung der Frage 1 von dem jeweiligen Anbieter benötigt wird. In Fig. 1 ist das System zum Zeitpunkt tₙ dargestellt, wobei der Nutzer über den client 4 erstmals eine Frage 1 an den host 2 zur Beantwortung gestellt hat. Die Frage 1 kann beispielsweise von allen Beantwortern gleichzeitig gelesen werden. Alle Beantworter stehen auf derselben Rangstufe. Die über die Anbieter-clients 5, 6, 7 erbrachten Antworten 8, 9, 10 werden an den host 2 übertragen und dort aufgrund der individuell unterschiedlichen Bearbeitungszeit des jeweiligen Beantworters dem Benutzer unterschiedlich schnell angezeigt. So wird die Antwort 8 nach einer Zeitspanne Δt₁ angezeigt, die Antwort 9 nach einer Zeitspanne Δt₂ und die Antwort 10 nach einer Zeitspanne Δt₃. Da im vorliegenden Fall beispielsweise als dienstleistungsspezifischer Qualitätsparameter die Bearbeitungszeit der Beantworter ausgewählt worden ist, hat der dem Anbieter-client 5 zugeordnete Beantworter die Frage 1 am schnellsten beantwortet, während der dem Anbieter-client 6 zugeordnete Beantworter die Frage 1 am langsamsten beantwortet hat. Ist eine Vergütung beispielsweise lediglich für die beiden schnellsten Beantworter vorgesehen, erhält der dem Anbieter-client 6 zugeordnete Beantworter keine Vergütung. Somit hat jeder Beantworter zunächst das Ziel, möglichst schnell die Frage 1 zu beantworten.

Erfindungsgemäß ist nun vorgesehen, daß dienstleistungsspezifische Qualitätsparameter-Werte der Beantworter, im vorliegenden Fall die Bearbeitungszeiten zum Beantworten der Frage 1, miteinander und/oder nach festgelegten Sollwerten verglichen werden. Dies kann beispielsweise automatisch durch den host 2 erfolgen. Darüber hinaus ist es auch möglich, daß weitere dienstleistungsspezifische Qualitätsparameter direkt durch den Nutzer über den client 4 bewertet werden. Auch eine Bewertung durch Dritte ist grundsätzlich möglich. Auf der Grundlage der Bewertung wird über den host 2 automatisch eine Ranghöhe bzw. ein bestimmter Rangwert jedes einzelnen Beantworters/Anbieters und anschließend eine Rangfolge der Beantworter ermittelt.

In der Fig. 2 ist das System im Zustand tₙ₊₁ dargestellt, also nach erfolgter Bewertung der Beantworter durch den host und/oder durch den Nutzer und anschließender Rangbildung. Die Rangbildung führt im vorliegenden Fall dazu, daß die den Anbieter-clients 5, 6, 7 zugeordneten Beantworter entsprechend der jeweiligen Ranghöhe in der Rangfolge zur Erbringung der Dienstleistung zugelassen werden. Beispielsweise kann entsprechend der Rangfolge dem rangniederen Beantworter die Frage 1 erst nach dem ranghöheren Beantworter angezeigt werden. Grundsätzlich ist auch jede andere Art der Privilegierung des ranghöheren Beantworters gegenüber dem rangniedrigerem Beantworter möglich. Im vorliegenden Fall nimmt der dem Anbieter-client 5 zugeordnete Beantworter den höchsten Rang ein, während der dem Anbieter-client 6 zugeordnete Beantworter den niedersten Rang in der Rangfolge einnimmt. Wird nun von dem Nutzer über den client 4 erneut eine Frage 1 an den host 2 gestellt, so kann entsprechend der Rangfolge zuerst der dem Anbieter-client 5 zugeordnete ranghöchste Beantworter die Frage 1 lesen, während dem dem Anbieter-client 6 zugeordneten Beantworter die Frage 1 zuletzt angezeigt wird. Der dem Anbieter-client 5 zugeordnete Beantworter erhält damit einen Zeitvorteil gegenüber den rangniederen Beantwortern, der ihm hilft, bei der Beantwortung der Frage 1 die Bearbeitungszeit vergleichsweise gering zu halten. Das führt zu einer Belohnung des ranghöchsten Beantworters, verbunden mit einer Motivation der rangniederen Beantworter zur Leistungssteigerung.

Bei einer besonders bevorzugten Ausführungsform der Erfindung ist nun gemäß Fig. 2 vorgesehen, daß Anbieter mit einem vergleichsweise niederen Rang erst nach Ablauf einer Zeitsperre zur Erbringung der Dienstleistung vorgesehen werden. Das bedeutet, daß die zeitliche Versetzung von Anbietern mit unterschiedlich hohen Rängen in der Rangfolge ausgedehnt wird. Die Anbieter werden entsprechend der Rangfolge somit nicht unmittelbar nacheinander, sondern um die Zeitsperre versetzt zur Erbringung der Dienstleistung vorgesehen. Dabei wird gemäß der Fig. 1 und 2 unterstellt, daß die Bearbeitungszeiten Δt₁, Δt₂ und Δt₃ zur Beantwortung der Frage 1 unverändert sind.

Der Beantworter mit dem höchsten Rang, gemäß der Fig. 2 also der dem Anbieter-client 5 zugeordnete Beantworter, kann als erster die Frage 1 lesen und beantworten. Die den Anbieter-clients 6, 7 zugeordneten Beantworter können die Frage 1 jedoch erst nach Ablauf der Zeitsperre Δt₄ lesen und beantworten. Die Zeitsperre Δt₄ ist im vorliegenden Fall gleich lang gewählt, kann jedoch grundsätzlich auch in Abhängigkeit von der Ranghöhe eines Beantworters oder auch individuell vorgegeben werden. Die Zeitsperre wird vorzugsweise automatisch von dem host 2 verhängt. Die Antworten 9, 10 werden daher um die Bearbeitungszeit Δt₄+Δt₂ bzw. Δt₄+Δt₃ verzögert auf dem host 2 bzw. auf dem client 4 angezeigt.

Dies hat zur Folge, daß jeder Anbieter aus Angst vor einer Zeitsperre sein Bestes geben wird, einen möglichst hohen Rang in der Rangfolge einzunehmen. Dadurch wird insgesamt die Qualität der Antworten bzw. der Recherche-Ergebnisse deutlich verbessert.

Der Anreiz, einen hohen Rang in der Rangfolge einzunehmen, erwächst beispielsweise daraus, daß sich die Bewertung der Beantworter bzw. die Zeitsperre unmittelbar auf die Vergütung auswirken kann. Darüber hinaus ist es auch möglich, daß nur eine begrenzte Anzahl von Beantwortern eine Vergütung erhält, während die später eine Frage 1 beantwortenden Beantworter keine Vergütung erhalten. Der Leistungsdruck auf die Beantworter wird dabei durch die Zeitsperre deutlich verstärkt, was sich positiv auf die Qualität der erbrachten Dienstleistung auswirkt.

## Patentansprüche

1. Verfahren zur Erbringung von Dienstleistungen, vorzugsweise von Telekommunikations- und/oder Internetdienstleistungen, über ein Kommunikationsnetz, wobei eine Kommunikationsverbindung (3) zwischen einem host (2) und wenigstens einem client (4) eines Nutzers vorgesehen ist, wobei von einem Nutzer eine Anfrage zur Erbringung einer Dienstleistung über einen client (4) an den host (2) übermittelt wird und wobei der host (2) mit einer Mehrzahl von Anbieterclients (5, 6, 7) von Anbietern der Dienstleistung kommuniziert, **dadurch gekennzeichnet, daß** die Dienstleistungen der Anbieter nach dienstleistungsspezifischen Qualitätsparametern durch den host (2) und/oder durch den Nutzer und/oder durch Dritte bewertet werden und daß auf der Grundlage dieser Bewertung durch den Host (2) automatisch eine Rangfolge der Anbieter ermittelt wird, wobei der Host (2) den Anbietern die Freigabe und/oder Möglichkeit zum Anbieten bzw. zur Erbringung der angefragten Dienstleistung automatisch in Abhängigkeit von ihrem jeweiligen Rang zuweist.

2. Verfahren nach Anspruch 1, **dadurch gekennzeichnet, daß** die Anbieter entsprechend ihres jeweiligen Ranges wenigstens zwei unterschiedlichen Qualifikationsklassen mit unterschiedlicher Ranghöhe zugeteilt werden, wobei Anbieter aus einer höheren Qualifikationsklasse bevorzugt vor den Anbietern aus einer rangniederen Qualifikationsklasse zur Erbringung bzw. zum Anbieten der Dienstleistung vorgesehen werden.

3. Verfahren nach Anspruch 1 oder 2, **dadurch gekennzeichnet, daß** wenigstens ein Anbieter mit einem hohen Rang und/oder aus einer ranghohen Qualifikationsklasse, vorzugsweise mit dem höchsten Rang bzw. aus der höchsten Qualifikationsklasse, sofort zur Erbringung der Dienstleistung vorgesehen wird und daß Anbieter mit einem vergleichsweise niederen Rang und/oder aus einer vergleichsweise rangniederen Qualifikationsklasse erst nach Ablauf einer Zeitsperre zur Erbringung der Dienstleistung vorgesehen werden.

4. Verfahren nach einem der vorhergehenden Ansprüche, **dadurch gekennzeichnet, daß** die angefragte Dienstleistung entweder um die Zeitsperre versetzt einem rangniederen Anbieter angezeigt wird und/oder von dem rangniederen Anbieter abrufbar ist oder daß die Anfrage nach der Dienstleistung sofort weitergeleitet und der raugniedere Anbieter die Dienstleistung um die Zeitsperre versetzt erbringen kann oder daß eine von einem rangniederen Anbieter sofort erbrachte Dienstleistung um die Zeitsperre versetzt an den client weitergeleitet wird.

5. Verfahren nach einem der vorhergehenden Ansprüche, **dadurch gekennzeichnet, daß** zur Bewertung der Anbieter und/oder zur Ermittlung von deren Rangfolge dienstleistungsspezifische Qualitätsparameter-Werte mehrerer Anbieter miteinander verglichen und/oder dienstleistungsspezifische Qualitätsparameter-Werte der Anbieter mit festgelegten Sollwerten verglichen werden.

6. Verfahren nach einem der vorhergehenden Ansprüche, **dadurch gekennzeichnet, daß** die Bewertung bzw. die Ermittlung der Rangfolge auf der Grundlage einer Mehrzahl von Dienstleistungsanfragen und/oder einer Mehrzahl von erbrachten Dienstleistungen automatisch erfolgt und/oder daß die Bewertung bzw. die Ermittlung der Rangfolge auf der Grundlage zeitlicher und/oder qualitativer und/oder quantitativer Mittelung der diensfleistungsspezifischen Qualitätsparameter-Werte automatisch erfolgt und/oder daß die Dienstleistungen der Anbieter nach jeder erbrachten Dienstleistung erneut bewertet werden.

7. Verfahren nach einem der vorhergehenden Ansprüche, **dadurch gekennzeichnet, daß** die Dauer der Zeitsperre und/oder die Bemessung der Benachteiligung in Abhängigkeit des Ranges der Qualifikationsklasse und/oder des Ranges des Anbieters und/oder individuell festgelegt wird und/oder daß die Dauer der Zeitsperre in Abhängigkeit von der Rangverteilung und/oder von der Gesamtzahl der Anbieter und/oder von der Anzahl der Anbieter in einer Qualifikationsklasse und/oder der Anzahl der Anbieter, die zum Zeitpunkt der Anfrage online sind, festgelegt wird.

8. Verfahren nach einem der vorhergehenden Ansprüche, **dadurch gekennzeichnet, daß** die Anfrage nach der Dienstleistung allen Anbietern gleichzeitig angezeigt wird.

9. Verfahren nach einem der vorhergehenden Ansprüche, **dadurch gekennzeichnet**, das die Bewertung und/oder die Qualifikationsklasse und/oder die Rangfolge und/oder dienstleistungsspezifische Parameterwerte und/oder die Dauer der Zeitsperre und/oder die verbleibende Dauer bis zum Ablauf der Zeitsperre dem Anbieter und/oder ein einen Ablauf der Zeitsperre kennzeichnendes Signal angezeigt wird.

10. System zur Erbringung von Dienstleistungen über ein Kommunikationsnetz, vorzugsweise von Telekommunikations- und/oder Internetdienstleistungen, aufweisend einen durch Kommunikationsverbindungen (3) mit einem client (4) und einer Mehrzahl von Anbieterclients (5, 6, 7) verbundenen Host (2) zur Durchführung eines Verfahrens nach einem der vorhergehenden Verfahrensansprüche.

## Claims

1. Method for providing services, preferably telecommunication and/or Internet services, via a communication network, a communication link (3) being provided between a host (2) and at least one client (4) of a user, a user transmitting a request to provide a service to the host (2) via a client (4), and the host (2) communicating with a plurality of provider clients (5, 6, 7) of providers of the service, **characterized in that** the services of the providers are assessed, in accordance with service-specific quality parameters, by the host (2) and/or by the user and/or by third parties, and **in that** the host (2) automatically determines an order of rank for the providers on the basis of this assessment, the host (2) automatically enabling and/or making it possible for the providers to offer or provide the requested service on the basis of their respective rank.

2. Method according to Claim 1, **characterized in that** the providers are assigned, in accordance with their respective rank, to at least two different qualification classes having a different ranking, providers from a higher qualification class preferably being intended to provide or offer the service before the providers from a low-ranking qualification class.

3. Method according to Claim 1 or 2, **characterized in that** at least one provider having a high rank and/or from a high-ranking qualification class, preferably having the highest rank and/or from the highest qualification class, is intended to immediately provide the service, and **in that** providers having a comparatively low rank and/or from a comparatively low-ranking qualification class are intended to provide the service only after a time-out has expired.

4. Method according to one of the preceding claims, **characterized in that** the requested service is either indicated to a low-ranking provider in a manner offset by the time-out and/or can be called up by the low-ranking provider, or **in that** the request for the service is immediately forwarded and the low-ranking provider can provide the service in a manner offset by the time-out, or **in that** a service which is immediately provided by a low-ranking provider is forwarded to the client in a manner offset by the time-out.

5. Method according to one of the preceding claims, **characterized in that**, in order to assess the providers and/or determine their order of rank, service-specific quality parameter values for a plurality of providers are compared with one another and/or service-specific quality parameter values for the providers are compared with defined desired values.

6. Method according to one of the preceding claims, **characterized in that** the order of rank is automatically assessed or determined on the basis of a plurality of service requests and/or a plurality of services which have been provided, and/or **in that** the order of rank is automatically assessed or determined on the basis of the temporal and/or qualitative and/or quantitative averaging of the service-specific quality parameter values, and/or **in that** the services of the providers are assessed again after each service that is provided.

7. Method according to one of the preceding claims, **characterized in that** the duration of the time-out and/or the extent of discrimination is/are determined on the basis of the rank of the qualification class and/or the rank of the provider and/or individually, and/or **in that** the duration of the time-out is determined on the basis of the rank allocation and/or the total number of providers and/or the number of providers in a qualification class and/or the number of providers which are on-line at the time of the request.

8. Method according to one of the preceding claims, **characterized in that** the request for the service is indicated to all of the providers at the same time.

9. Method according to one of the preceding claims, **characterized in that** the assessment and/or the qualification class and/or the order of rank and/or service-specific parameter values and/or the duration of the time-out and/or the remaining period until the time-out expires and/or a signal which indicates that the time-out has expired is/are indicated to the provider.

10. System for providing services via a communication network, preferably telecommunication and/or Internet services, having a host (2), which is connected, by means of communication links (3), to a client (4) and to a plurality of provider clients (5, 6, 7), for carrying out a method according to one of the preceding method claims.

## Revendications

1. Procédé pour fournir des prestations de service, de préférence des prestations de service de télécommunication et/ou d'Internet, par le biais d'un réseau de communication, une liaison de communication (3) étant prévue entre un hôte (2) et au moins un client (4) d'un utilisateur, une demande de fourniture d'une prestation de service étant transmise par un utilisateur à l'hôte (2) par le biais d'un client (4) et l'hôte (2) communiquant avec une pluralité de clients de fournisseur (5, 6, 7) de fournisseurs de la prestation de service, **caractérisé en ce que** les prestations de service des fournisseurs sont évaluées par l'hôte (2) et/ou par l'utilisateur et/ou par des tiers en fonction de paramètres de qualité spécifiques à la prestation de service et qu'un classement des fournisseurs est déterminé automatiquement par l'hôte (2) en se basant sur cette évaluation, l'hôte (2) affectant aux fournisseurs la validation et/ou la possibilité de proposer ou de fournir la prestation de service demandée automatiquement en fonction de leur position dans le classement.

2. Procédé selon la revendication 1, **caractérisé en ce qu'**au moins deux classes de qualification ayant des positions de classement différentes sont affectées aux fournisseurs en fonction de leurs positions respectives, les fournisseurs d'une classe de qualification plus élevée étant prévus préférentiellement avant les fournisseurs d'une classe de qualification moins élevée dans le classement pour fournir ou pour proposer la prestation de service.

3. Procédé selon la revendication 1 ou 2, **caractérisé en ce qu'**au moins un fournisseur ayant une position élevée et/ou d'une classe de qualification ayant une position élevée, de préférence avec la position la plus élevée ou de la classe de qualification la plus élevée, est prévu immédiatement pour fournir la prestation de service et que les fournisseurs ayant une position comparativement inférieure et/ou d'une classe de qualification ayant une position comparativement inférieure ne sont prévus pour fournir la prestation de service qu'après écoulement d'un délai d'attente.

4. Procédé selon l'une des revendications précédentes, **caractérisé en ce que** la prestation de service demandée est soit indiquée à un fournisseur ayant une position inférieure avec un décalage égal au délai d'attente et/ou peut être consultée par le fournisseur ayant une position inférieure ou que la demande de prestation de service soit retransmise immédiatement et le fournisseur ayant une position inférieure peut fournir la prestation avec un décalage égal au délai d'attente ou qu'une prestation de service fournie immédiatement par un fournisseur ayant une position inférieure soit retransmise au client avec un décalage égal au délai d'attente.

5. Procédé selon l'une des revendications précédentes, **caractérisé en ce que** pour évaluer le fournisseur et/ou pour déterminer sa position dans le classement, les valeurs de paramètre de qualité spécifiques à la prestation de service de plusieurs fournisseurs sont comparées entre elles et/ou les valeurs de paramètre de qualité spécifiques à la prestation de service du fournisseur sont comparées avec des valeurs de consigne données.

6. Procédé selon l'une des revendications précédentes, **caractérisé en ce que** l'évaluation ou la détermination de la position dans le classement s'effectue automatiquement en se basant sur une pluralité de demandes de prestation de service et/ou une pluralité de prestations de service fournies et/ou que l'évaluation ou la détermination de la position dans le classement s'effectue automatiquement en se basant sur la détermination de la moyenne dans le temps et/ou qualitative et/ou quantitative des valeurs de paramètre de qualité spécifiques à la prestation de service et/ou que les prestations de service du fournisseur font l'objet d'une nouvelle évaluation après chaque prestation de service fournie.

7. Procédé selon l'une des revendications précédentes, **caractérisé en ce que** la durée du délai d'attente et/ou le niveau de désavantage est déterminé en fonction de la position de la classe de classification et/ou de la position du fournisseur et/ou individuellement et/ou que la durée du délai d'attente est déterminée en fonction des distributions de la position et/ou du nombre total de fournisseurs et/ou du nombre de fournisseurs dans une classe de qualification et/ou du nombre de fournisseurs qui sont connectés au moment de la demande.

8. Procédé selon l'une des revendications précédentes, **caractérisé en ce que** la demande de prestation de service est indiquée simultanément à tous les fournisseurs.

9. Procédé selon l'une des revendications précédentes, **caractérisé en ce que** l'évaluation et/ou la classe de qualification et/ou le classement et/ou les valeurs de paramètre de qualité spécifiques à la prestation de service et/ou la durée du délai d'attente et/ou la durée restante jusqu'à l'écoulement du délai d'attente et/ou un signal caractérisant un écoulement du délai d'attente est indiqué au fournisseur.

10. Système pour fournir des prestations de service par le biais d'un réseau de communication, de préférence des prestations de service de télécommunication et/ou d'Internet, présentant un hôte (2) relié à un client (4) et à une pluralité de clients de fournisseur (5, 6, 7) par le biais de liaisons de communication (3) pour mettre en oeuvre un procédé selon l'une des revendications précédentes.
